Europäisches Patentamt

European Patent Office

Office européen des brevets

(19)

(11) Numéro de publication : **0 030 179 B1**

# FASCICULE DE BREVET EUROPÉEN

(12)

(45) Date de publication du fascicule du brevet :
**17.10.84**

(21) Numéro de dépôt : **80401625.1**

(22) Date de dépôt : **13.11.80**

(51) Int. Cl.³ : **F 01 D 21/04**, F 04 D 29/40

(54) **Structure de rétention pour carter de compresseur d'une turbomachine.**

(30) Priorité : **27.11.79 FR 7929114**

(43) Date de publication de la demande :
**10.06.81 Bulletin 81/23**

(45) Mention de la délivrance du brevet :
**17.10.84 Bulletin 84/42**

(84) Etats contractants désignés :
**DE FR GB**

(56) Documents cités :
**EP-A- 0 027 756**
**FR-A- 1 189 849**
**FR-A- 1 429 834**
**FR-A- 1 534 297**
**FR-A- 2 282 537**
**FR-A- 2 375 443**
**GB-A- 2 010 434**
**US-A- 2 999 667**
**US-A- 3 867 060**
**US-A- 4 055 041**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bouiller, Jean Georges**
**10, rue Kléber**
**F-91800 Brunoy (FR)**
Inventeur : **Jourdain, Gérard Ernest André**
**4 Résidence d'Arcadie**
**Saintry s/Seine F-91100 Corbeil Essonnes (FR)**
Inventeur : **Soligny, Marcel Robert**
**136, Boulevard Jean Mermoz**
**F-94150 Chevilly-Larue (FR)**

(74) Mandataire : **Molnat, François et al**
**S.N.E.C.M.A. Service des Brevets Boîte Postale 81**
**F-91003 Evry Cedex (FR)**

EP 0 030 179 B1

Jouve, 18, rue St-Denis, 75001 Paris, France

## Description

L'invention concerne une structure de rétention pour carter de compresseur d'une turbomachine à double flux comprenant une manche d'entrée d'air, le compresseur et son carter, l'ensemble moteur et son carter, la structure de rétention entourant le compresseur.

Les règlements de sécurité concernant les turbomachines exigent que l'avionneur se prémunisse contre l'éclatement des disques de rotors ou les ruptures d'aubes pour éviter les accidents catastrophiques. Cette protection est assurée par la mise en place de boucliers dont la masse grève les performances de l'avion.

Les caractéristiques que doit présenter le carter d'une turbomachine dans la zone des éléments tournants sont les suivantes : aucun fragment ne doit traverser le carter qui doit en outre résister à l'érosion des débris entraînés par le rotor ; la structure de rétention doit avoir une inertie suffisante pour ne pas subir de déformations importantes ou être le siège de résonances vibratoires dangereuses, et elle doit s'inscrire dans les limites dimensionnelles normales de la nacelle.

Afin de répondre à ces considérations de perforation, tronçonnage, rigidité et encombrement, de nombreuses solutions ont été proposées. C'est ainsi que le brevet français 2 282 537 décrit un carter de turbomachine comportant une paroi interne annulaire qui comprend, alternées axialement, des parties destinées à maintenir les aubes de stator et des parties entourant les extrémités d'aubes de rotor. Cette paroi est entourée par une couche extérieure de matériau composite renforcé par des fibres de carbone continues enroulées autour de la paroi et noyées dans de la résine. Les aubes de stator sont maintenues dans des évidements tournés vers l'intérieur et qui alternent avec les parties entourant les extrémités des aubes de rotor et présentant des évidements tournés vers l'extérieur. L'extérieur du carter est ainsi formé de sections de diamètre différent, ce qui rend difficile l'enroulement de la couche extérieure de rétention. Afin d'obtenir une surface régulière sans variation brusque de diamètre, les évidements tournés vers l'extérieur sont remplis d'un matériau en nid d'abeilles. Les anneaux de retenue d'aubes de stator, en acier laminé, sont séparés par des entretoises annulaires formées dans un matériau plastique. L'ensemble est maintenu et renforcé par l'enroulement de fibres de carbone noyé dans la résine.

Dans ce dispositif, l'aube ou la partie d'aube cassée est maintenue par les anneaux métalliques, mais celle-ci n'est pas évacuée rapidement du carter et la seule possibilité d'extraction consiste en sa fragmentation par les autres aubes et son évacuation par le flux d'air.

Le brevet français 1 429 834 montre une réalisation permettant d'éviter quelques-uns des inconvénients du dispositif ci-dessus décrit. Le carter du compresseur est constitué d'une enveloppe cylindrique intérieure et d'une enveloppe cylindrique extérieure entre lesquelles est intercalée une structure en nid d'abeilles. L'enveloppe intérieure est elle-même formée d'un treillis métallique compris entre deux couches de résine. Les aubes du stator forment une couronne cylindrique et chaque aube traverse la structure nid d'abeilles dans laquelle elle est maintenue par de la résine synthétique. La structure nid d'abeilles a pour fonction d'assurer la liaison entre les enveloppes extérieure et intérieure et d'assurer le montage des aubes, tandis que l'enveloppe intérieure s'oppose, par sa constitution particulière, à l'abrasion par les débris et à sa fracturation au cas où une aube se détacherait.

La réalisation ci-dessus décrite est plus particulièrement adaptée à un compresseur pour réacteur de petite puissance et de petit diamètre. La structure résine grille métallique ne peut supporter sans dommage important l'impact d'une aube ou d'un débris à très grande vitesse tangentielle.

Le brevet US-A 4 055 041 décrit un ensemble intégré moteur-nacelle dans lequel au droit des aubes de soufflante un anneau de rétention de type massif est inséré entre une garniture d'étanchéité encastrée comportant des rainures et placée du côté radialement interne et du côté externe une structure composée d'une âme de type nid d'abeilles disposée entre deux peaux. Cette structure à nids d'abeilles constitue un capotage mais ne remplit pas de rôle de rétention par suite de l'écran interposé et de plus cette structure intégrée se substitue au carter de soufflante alors qu'un des buts de l'invention est d'éviter l'emploi d'élément massif et un autre but est de réaliser une structure de rétention qui se superpose au carter de compresseur.

La demande de brevet EP-A 0027756 décrit un dispositif de sécurité qui comporte successivement une enveloppe interne, une première couche de secteurs en matériau déformable, un enroulement d'élément de forme longue noyé dans une résine polymérisable une seconde couche de secteurs en matériau déformable et une enveloppe externe. Comme cela est visible sur la figure 5 de cette demande, ce dispositif est placé du côté radialement externe du carter. Les couches de matériau déformable, par exemple de type nids d'abeilles, utilisées sont formées de secteurs, ce qui convient au mode de rétention dans lequel l'absorption d'énergie se fait par frottements des câbles (élément de forme longue) dans leur matrice et mise en tensions internes, les déformations étant transmises et réparties sur toute la circonférence. Cette solution vise toutefois principalement à protéger les éléments extérieurs et à éviter des dommages à l'environnement alors qu'un des buts de la présente invention est également de limiter les détériorations internes et en particulier l'endommagement du carter.

L'invention vise à l'obtention d'une structure de rétention présentant une masse minimale, une rigidité suffisante pour assurer la liaison entre la manche d'entrée d'air et le reste du carter moteur, et un pouvoir de rétention maximal pour des débris à grande vitesse tangentielle. La structure de rétention réalisée est du type comportant un anneau d'étanchéité aux extrémités des aubes et une structure du type sandwich composée d'une âme centrale constituée d'un nid d'abeilles entre deux peaux.

La structure de rétention, suivant l'invention, est caractérisée en ce que successivement, dans la direction radiale, de l'intérieur vers l'extérieur :

— l'anneau d'étanchéité est constitué d'un support monobloc revêtu d'une couche d'usure distincte, ledit support étant amovible ;

— dans la structure du type sandwich, la peau intérieure est réalisée en tissu imprégné et est prévue, sensiblement en regard des extrémités des aubes, pour recevoir l'anneau d'étanchéité, la peau extérieure est métallique et porte un renfort constitué par au moins une nervure placée entre les deux peaux en position radiale, dans la zone balayée par les aubes du rotor et prolongée du côté intérieur par une aile formant un anneau cylindrique, des brides de jonction à la manche d'entrée et au carter intermédiaire étant ménagées aux extrémités en liaison avec la peau extérieure métallique ;

— une couche externe de renforcement en matériau composite fibreux est adjointe, constituée d'une résine synthétique dans laquelle est noyé un enroulement de fibres polyimide.

Ainsi, la structure selon l'invention associe une couche en matériau composite fibreux qui assure une fonction de rétention et une structure sandwich qui assure la rigidité pour un bon comportement statique et dynamique.

La description et la figure donnée ci-après à titre d'exemple permettront de comprendre comment l'invention peut être réalisée.

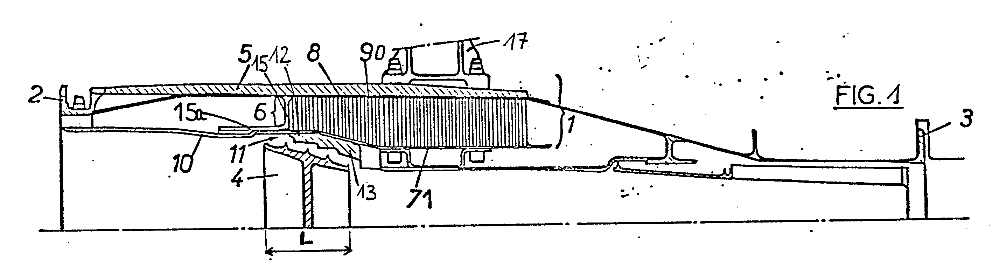

La figure 1 représente un exemple de réalisation de la structure de rétention vue en demi-coupe longitudinale.

La structure de rétention 1, représentée figure 1, est fixée à ses extrémités par l'intermédiaire des brides 2 et 3 à la manche à air et au carter moteur (non représentés). Cette structure dépasse en arrière la zone L balayée par les aubes du rotor 4. Face aux aubes du rotor, un anneau d'étanchéité 11 est fixé sur la structure. Cet anneau est constitué d'un support 12 revêtu d'une couche d'usure 13 et il peut être amovible, le support 12 étant monobloc.

La structure de rétention comporte une couche extérieure 5 et une couche intérieure 6. La couche intérieure est constituée d'une structure sandwich, formée d'une peau intérieure 71 en matériau composite du type en résine synthétique éventuellement armée d'un tissu de fibres de verre ou autres, cette peau recouvrant une structure en nid d'abeilles 8, collée sur une peau 90 métallique. La structure en nid d'abeilles est renforcée par la couche extérieure 5 en matériau composite fibreux, constituée par exemple de couches de fibres suivant la désignation commerciale Kevlar ou d'un bobinage de fibres polyimide immobilisé dans une résine synthétique.

La peau extérieure 90 métallique porte une partie renforcée par une nervure métallique 15 dont une extrémité est prolongée par une aile et se trouve en face de l'aubage. La peau extérieure 90 métallique porte à ses extrémités les brides 2 et 3.

Cette aile 15a de la partie renforcée permet également le maintien des tôles intérieures 10 définissant le profil aérodynamique du conduit.

## Revendications

1. Structure de rétention pour carter de compresseur de turbomachine à double flux destiné à assurer :

— la liaison entre une manche d'entrée d'air située en amont et un carter intermédiaire situé en aval ;

— la rétention des fragments consécutifs à une rupture de la partie tournante ;

— l'étanchéité aux extrémités des aubes,
et comportant un anneau d'étanchéité et une structure du type sandwich composée d'une âme centrale constituée d'un nid d'abeilles entre deux peaux, caractérisée en ce que successivement, dans la direction radiale, de l'intérieur vers l'extérieur :

— l'anneau d'étanchéité (11) est constitué d'un support monobloc (12) revêtu d'une couche d'usure distincte (13), ledit support (12) étant amovible,

— dans la structure du type sandwich (6), la peau intérieure (71) est réalisée en tissu imprégné et est prévue, sensiblement en regard des extrémités des aubes (4), pour recevoir l'anneau d'étanchéité (11), la peau extérieure (90) est métallique et porte un renfort constitué par au moins une nervure (15) placée entre les deux peaux (71, 90) en position radiale, dans la zone balayée par les aubes du rotor et prolongée du côté intérieur par une aile (15a) formant un anneau cylindrique, des brides (2, 3) de jonction à la manche d'entrée et au carter intermédiaire étant ménagées aux extrémités en liaison avec la peau extérieure métallique (90),

— une couche externe (5) de renforcement en matériau composite fibreux est adjointe, constituée d'une résine synthétique dans laquelle est noyé un enroulement de fibres polyimide.

2. Structure de rétention selon la revendication 1, caractérisée en ce que le renfort est constitué au moins partiellement par un épaississement de la peau métallique (90) et une nervure (15) placée entre les deux peaux (71, 90), dans la zone balayée par les aubes du rotor.

## Claims

1. Retaining structure for the casing of the compressor of a turbo machine with twin flow intended to provide :

— the connection between an air inlet duct disposed upstream and an intermediate casing disposed downstream ;

— the retention of fragments following a fracture of the rotating part ;

— sealing at the blade tips, and comprising a sealing ring and a sandwich type of structure composed of a central core constituted by a honeycomb lying between two skins, characterised in this that successively in the radial direction, from the interior outwardly :

— the sealing ring (11) is constituted by a monobloc support (12) coated with a separate wear layer (13), the said support (12) being detachable ;

— in the sandwich type structure (6), the internal skin (71) is made of impregnated foil and is provided, substantially opposite to the tips of the blades (4), in order to accommodate the fluidtight seal (11), the external skin (90) is of metal and has a reinforcement constituted by at least one rib (15) disposed between the two skins (71, 90) in a radial location, in the zone swept by the rotor blades and extended from the inside by a sleeve (15a) forming a cylindrical ring, connecting flanges (2, 3) at the junction with the inlet duct and at the junction with the intermediate casing being provided at the ends in association with the outer metal skin (90),

— an external layer (5) of reinforcement of a fibrous composite material is added constituted by a synthetic resin in which is embedded a winding of polyimide fibres.

2. Retaining structure according to claim 1, characterised in this that the reinforcement is at least partially constituted by a thickening of the metal skin (90) and a rib (15) disposed between the two skins (71, 90) in the zone swept by the rotor blades.


**Ansprüche**

1. Fangstruktur für das Kompressorgehäuse einer Doppelstrom-Turbomaschine bestimmt zur Sicherung

— der Verbindung zwischen einem vorgeschalteten Lufteintrittskanal und einem nachgeschalteten Zwischengehäuse ;

— des Fangens der Bruchstücke bei einem Bruch der sich drehenden Teile ;

— der Dichtheit an den Enden der Schaufeln, und mit einem Dichtungsring und einer Sandwich-Anordnung zusammengesetzt aus einer wabenförmigen Mittelschicht zwischen zwei Außenschichten, dadurch gekennzeichnet, daß aufeinanderfolgend in der radialen Richtung von innen nach außen :

— der Dichtungsring (11) gebildet wird durch einen aus einem Stück bestehenden Träger (12), verkleidet mit einer besonderen Abnutzungsschicht (13), welcher Träger (12) abnehmbar ist,

— bei der Sandwich-Anordnung (6) ist die innere Schicht (71) aus einem imprägnierten Gewebe hergestellt und ist vorgesehen, etwa gegenüberliegend den Enden der Schaufeln (4), zur Aufnahme des Dichtungsringes (11), die äußere Schicht (90) ist metallisch und trägt eine Verstärkung, die durch mindestens eine Rippe (15) gebildet wird, vorgesehen zwischen den beiden Schichten (71, 90) in radialer Position in der durch die Schaufeln des Rotors bestrichenen Zone und verlängert auf der Innenseite durch einen Schenkel (15a), der einen zylindrischen Ring bildet, Flansche (2, 3) zur Verbindung mit dem Eintrittskanal und dem Zwischengehäuse sind vorgesehen an den Enden in Verbindung mit der äußeren metallischen Schicht (90),

— eine äußere Verstärkungsschicht (5) aus zusammengesetztem faserigen Material anliegend ist, das durch ein Kunstharz gebildet wird, und eine Bewicklung aus Polyimidfasern eingebettet ist.

2. Fangstruktur nach Anspruch 1, dadurch gekennzeichnet, daß die Verstärkung zumindest teilweise durch eine Verdickung der Metallschicht (90) und eine Rippe (15) gebildet wird, die zwischen den beiden Schichten (71, 90) in der von den Schaufeln des Rotors bestrichenen Zone vorgesehen ist.

FIG. 1

0 030 179